Europäisches Patentamt

European Patent Office

Office européen des brevets

(19)

(11) Numéro de publication: **0 271 086 B1**

(12) **FASCICULE DE BREVET EUROPEEN**

(45) Date de publication de fascicule du brevet:
16.10.91

(51) Int. Cl.5: **H01M 6/14**, H01M 2/26,
H01M 6/46

(21) Numéro de dépôt: **87118258.0**

(22) Date de dépôt: **09.12.87**

(54) **Générateur électrochimique à anode de lithium et à cathode liquide.**

(30) Priorité: **12.12.86 FR 8617426**

(43) Date de publication de la demande:
**15.06.88 Bulletin 88/24**

(45) Mention de la délivrance du brevet:
**16.10.91 Bulletin 91/42**

(84) Etats contractants désignés:
**DE FR GB**

(56) Documents cités:
| | |
|---|---|
| **WO-A-81/03720** | **DE-A- 3 520 855** |
| **DE-B- 1 149 106** | **FR-A- 2 539 917** |
| **GB-A- 1 209 336** | **US-A- 3 094 438** |
| **US-A- 4 327 158** | |

(73) Titulaire: **Société Anonyme dite SAFT**
**156, avenue de Metz**
**F-93230 Romainville(FR)**

(72) Inventeur: **Descroix, Jean-Pierre**
**16bis, rue de Neuilly**
**F-94120 Fontenay Sous Bois(FR)**
Inventeur: **Firmin, Jean-Luc**
**28 rue de la Bretonnerie**
**F-86000 Poitiers(FR)**
Inventeur: **Planchat, Jean-Pierre**
**3 rue de la Futaie**
**F-86280 Saint Benoît(FR)**

(74) Mandataire: **Weinmiller, Jürgen et al**
**Lennéstrasse 9 Postfach 24**
**W-8133 Feldafing(DE)**

## Description

La présente invention concerne un générateur électrochimique à anode de lithium et à cathode liquide et notamment les générateurs mettant en oeuvre les couples $Li/SO_2$, $Li/SOCl_2$, $Li/SO_2Cl_2$.

On connaît par le brevet français n° 2 539 917 du 21 janvier 1983 un génératuer électrochimique comportant dans un boîtier un empilage d'éléments plats constitués par des séparateurs et des électrodes munies d'une plaque métallique collectrice ; chaque électrode présente au moins deux ouvertures par lesquelles elles sont enfilées respectivement sur au moins deux axes métalliques parallèles entre eux avec des bagues métalliques intercalaires destinées d'un part à maintenir entre les plaques l'intervalle souhaité et d'autre part à réaliser la liaison électrique entre les électrodes correspondantes. L'ensemble est maintenu comprimé entre deux brides extrêmes, les axes étant munis à leurs extrémités de rondelles s'appuyant sur ces brides.

Des piles au lithium/oxyhalogénure ayant la structure précédente sont destinées à délivrer de fortes capacités (par exemple plus de 50 Ampères-heure) et sont capables d'accepter des régimes de décharge élevés (par exemple une décharge en une heure). On constate que ces piles peuvent être très dangereuses en cas d'explosion dûe à un fonctionnement anormal entraînant une élévation excessive de leur température.
Les causes de ce phénomène peuvent être notamment un court-circuit interne ou externe à la pile, ou une mauvaise évacuation des calories générées pendant la décharge.

La présente invention a pour but de réaliser une pile dont la structure soit telle que les risques de court-circuit interne soient réduits, que les conséquences d'un court-circuit interne ou externe soient limitées, et que la dissipation des calories soit favorisée.

La présente invention a pour objet un générateur électrochimique à anode de lithium et à cathode liquide comportant dans un boîtier un empilage d'éléments plats constitués par des séparateurs et des électrodes munies d'une plaque métallique collectrice, chaque électrode présentant au moins d eux ouvertures par lesquelles elles sont enfilées respectivement sur au moins deux axes métalliques parallèles entre eux avec des entretoises métalliques maintenant entre les plaques l'intervalle souhaité et réalisant la liaison électrique entre les électrodes correspondantes, caractérisé par le fait que le premier desdits axes métalliques associé aux électrodes de la première polarité traverse la totalité dudit empilage, qu'au moins un compartiment réserve d'électrolyte est ménagé suivant la hauteur de l'empilage entre ce dernier et ledit boîtier, que dans ce compartiment émergent des pattes de reprise de courant enfilées sur le second desdits axes métalliques et appartenant aux plaques collectrices des électrodes de la seconde polarité, et qu'une extrémité desdits axes est fixée rigidement à l'une des faces extrêmes dudit boîtier tandis que l'autre extrémité bénéficie d'un jeu à l'intérieur dudit boîtier.

On obtient ainsi une structure suffisamment rigide pour résister aux vibrations, mais présentant, en cas d'élévation de température, beaucoup moins de risques d'explosion que les structures antérieures. En effet la mise en oeuvre d'axes fixés rigidement à une seule de leurs extrémités, l'un au moins étant en outre enfilé sur des pattes présentant une certaine souplesse, permet de limiter les contraintes susceptibles d'apparaître dans les électrodes proprement dites en cas d'échauffement. Par conséquent le risque de court-circuit interne est considérablement reduit. En outre, le ou les reserves d'électrolyte dans les compartiments latéraux, dans lesquels peuvent émerger les séparateurs qui servent alors de mèches, permettent d'éviter l'assèchement des couples en fin de décharge, et par là-même l'apparition de points de fusion dangereux.

Selon un mode de réalisation préférentiel, le premier axe métallique traverse le centre de l'empilage et est connecté aux plaques cathodiques ; par ailleurs les électrodes de lithium possèdent deux pattes de reprise de courant en nickel émergeant dans deux compartiments d'électrolyte latéraux et enfilées respectivement sur deux axes de polarité négative.

Selon un mode de réalisation particulièrement avantageux, lesdites pattes de reprise de courant sont prévues pour constituer des fusibles et, en cas de court-circuit accidentel, éviter les conséquences fâcheuses d'un tel court-circuit.

De préférence, les électrodes et les séparateurs sont munis de perçages supplémentaires très précis destinés à permettre leur empilage sur des tiges de montage et à le réaliser le plus parfaitement possible pour éviter tout court-circuit interne.

D'autres caractéristiques et avantages de la présente invention apparaîtront au cours de la description suivante d'un mode de réalisation donné à titre illustratif mais nullement limitatif.

Dans le dessin annexé :
- La figure 1 est une vue partielle très schématique en coupe d'une pile selon l'invention.
- La figure 2 est une vue schématique en élévation d'une cathode appartenant à la pile de la figure 1.
- La figure 3 est une vue schématique en élévation d'un anode appartenant à la pile de la figure 1.
- La figure 4 est une vue schématique en élévation d'un séparateur appartenant à la pile de la figure 1.

- La figure 5 montre en coupe à l'échelle agrandie un détail référencé V dans la figure 1.

- La figure 6 montre en coupe à l'échelle agrandie un détail référencé VI dans la figure 1.

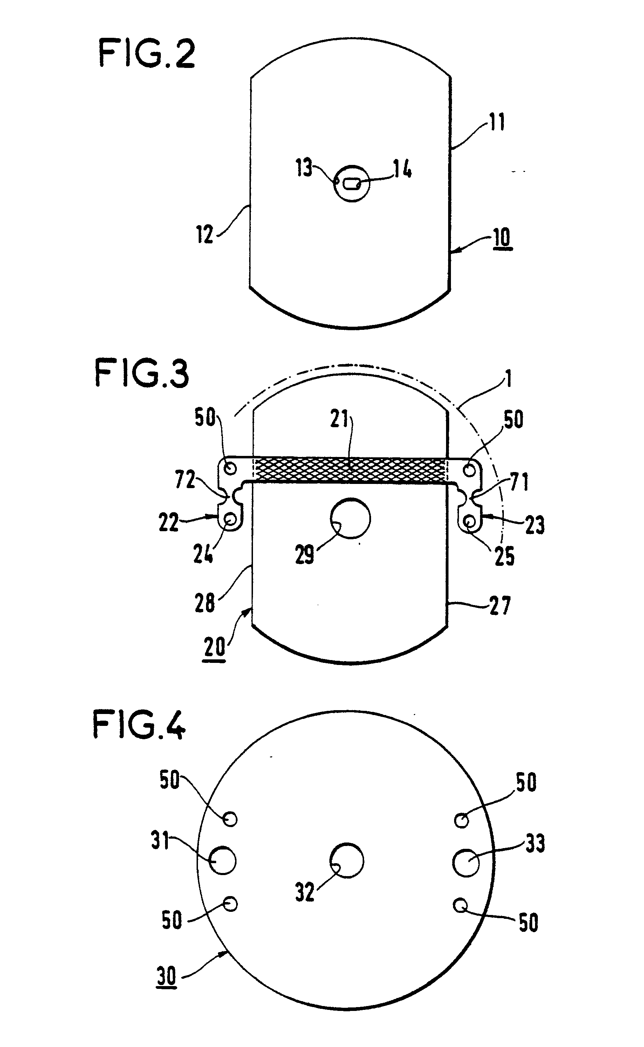

On va décrire ci-dessous une pile mettant en oeuvre un empilage comportant quarante et une anodes comme celle de la figure 3, et quarante cathodes comme celle de la figure 2, avec des séparateurs interposés comme celui de la figure 4.

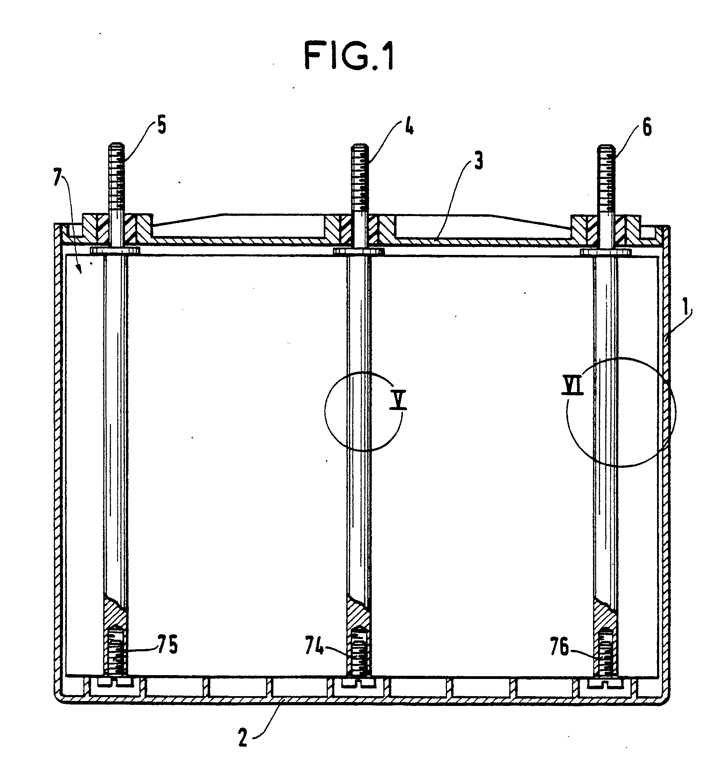

Ces constituants plats sont montés, comme cela sera explicité plus loin en détail, de manière à former un bloc électrochimique 7 dans un boîtier cylindrique 1 visible dans la figure 1, muni d'un fond 2 et d'un couvercle 3, grâce à la mise en oeuvre d'un axe central 4 formant une borne positive et de deux axes latéraux 5 et 6 formant deux bornes négatives ; ces axes ont un diamètre de 4 mm environ.

Une cathode 10, visible dans la figure 2, est constituée d'une grille de nickel électroformée présentant une épaisseur de l'ordre de 100 $\mu$m, dont les faces sont recouvertes de noit d'acétylène lié par du polytétrafluoréthylène. Cette cathode présente un périmètre circulaire de diamètre 100 mm avec deux pans coupés 11 et 12.

En son centre on prévoit une ouverture 14 de diamètre 4,2 mm pour le passage de l'axe central 4 ; autour de cette ouverture, la grille de nickel est nue sur chacune de ses faces suivant un anneau 13 de diamètre extérieur 11 mm.

Les pans coupés 11 et 12 laissent des passages pour les axes négatifs 5 et 6. La largeur entre ces pans coupés est de 68 mm.

L'épaisseur d'une cathode 10 est de l'ordre de 1,1 mm.

Une électrode négative 20 visible dans la figure 3 est formée d'une feuille de lithium dans laquelle est incrustée une plaque de nickel en forme de grille 21 dont les extrémités en équerre 22 et 23 sont en métal plein, et percées d'orifices 24 ou 25 situés dans l'axe de l'électrode pour le passage des axes 5 et 6.

Selon une variante, l'électrode négative peut être formée de deux feuilles de lithium avec une grille de nickel interposée.

La forme générale de cette électrode négative 20 est la même que celle de la cathode 10, c'est-à-dire avec un périmètre circulaire de diamètre 100 mm et deux pans coupés 27 et 28 distants de 68 mm. Au centre est prévu un trou 29 de diamètre 12,2 mm pour le passage de l'axe 4.

L'épaisseur de cette électrode 20 est de l'ordre de 0,38 mm.

Les séparateurs interposés entre les électrodes 10 et 20 sont visibles dans la figure 4. Chaque séparateur 30 a la forme d'un disque de diamètre 102 mm avec trois orifices 31, 32, 33 situés suivant un diamètre du séparateur pour le passage des axes 4, 5, 6.

Chaque séparatuer est de préférence formé de deux couches superposées : une couche résistante du point de vue mécanique en tissu de verre, et une couche microporeuse destinée à l'arrêt des particules fines et constituée d'un feutre de fibres de verre. L'épaisssceur d'un séparateur 30 est de l'ordre de 0,16 mm.

Pour réaliser un empilage de tous les constituants de la pile on se sert du couvercle 3 du boîtier 1 muni des axes 4, 5, 6 comme platine de montage. On ajoute des tiges (non illustrées) destinées à être enfilées dans des ouvertures 50 prévues dans les électrodes négatives 20 et les séparateurs 30, et visibles dans les figures 3, 4, afin de parfaire la mise en place. Ces tiges sont ôtées lorsque le montage est terminé et le bloc électrochimique 7 réalisé,

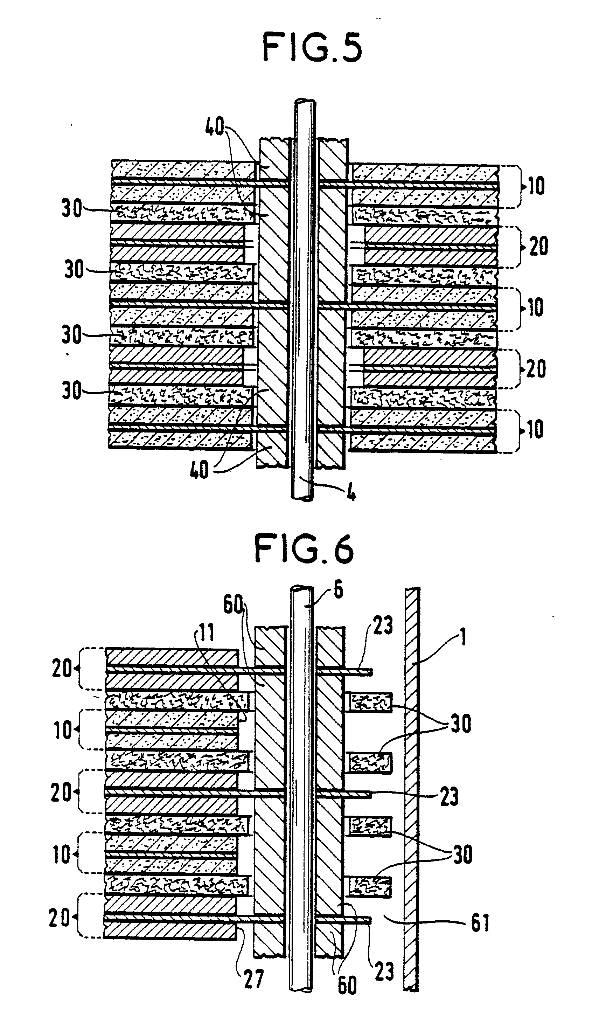

On voit dans la figure 5 comment est réalisé l'empilage au niveau de la lucarne V de la figure 1. Sur l'axe positif 4 sont enfilés successivement une cathode 10, un séparateur 30, une électrode négative 20, un séparateur 30, une cathode 10 et ainsi de suite...Les trous centraux 29 des électrodes négatives 20 sont suffisamment larges pour ne pas être en contact avec la polarité positive. Des entretoises cylindriques métalliques 40 sont enfilées sur l'axe 4 de manière à assurer le bon écartement entre d eux électrodes 10 et à réaliser le contact électrique entre elles. Ces entretoises sont telles qu'elles prennent appui sur la grille de nickel des électrodes 10 au niveau de la zone annulaire 13 visible dans la figure 2.

On voit dans la figure 6 comment est réalisé l'empilage au niveau de la lucarne VI de la figure 1, près de la périphérie du bloc électrochimique 7. L'axe 6 négative traverse les électrodes négatives 20 au niveau de l'ouverture 25 de la patte de reprise de courant 23 avec des entretoises métalliques 60 analogues aux entretoises 40 ; l'écartement entre les électrodes négatives 20, ainsi que leur connexion électrique sont donc réalisés.

On constate qu'entre les pans coupés 11 et 27 des électrodes et la paroi interne du boîtier 1 est défini un comportiment 61 susceptible de servir de réserve d'électrolyte et où baignent les bords des séparateurs 30 qui servent de mèches et permettent d'éviter l'assèchement des électrodes de lithium 20 au cours de la décharge.

A titre d'exemple, l'électrolyte est constitué d'un solvant choisi parmi $SO_2$, $SOCl_2$, $SO_2Cl_2$, avec comme soluté LiAl $Cl_4$.

Lorsque tous les constituants sont enfilés sur les axes 4, 5, 6, des vis 74, 75, 76 viennent bloquer l'ensemble du bloc électrochimique 7, mais rien ne lie rigidement la partie inférieure de ce bloc aux parois du boîtier 1 ou à son fond 2. La souplesse des pattes de reprise de courant permet donc d'encaisser des déformations du couvercle ou du boîtier qui pourraient apparaître en cours de fonctionnement et engendrer des courts-circuits.

Selon un perfectionnement très important de la présente invention, visible dans la figure 3, les pattes de reprise de courant 22 et 23 de chaque électrode négative 20 comportent un étranglement 71, 72 ayant par exemple une largeur de 0,6 mm pour une épaisseur de patte de 0.08 mm. Cet étranglement confère à la patte un fonction de fusible agissant en case de court-circuit interne ou externe à la pile. Dans l'exemple précis, le courant normal passant dans chaque électrode est de l'ordre de 1 Ampère, le courant de court-circuit peut être supérieur à 50 Ampères ; l'étranglement est choisi de façon à isoler le couple considéré si le courant est supérieur à 5 Ampères et éviter aussi les graves conséquences du court-circuit.

Bien entendu l'invention n'est pas limitée au mode de réalisation qui a été décrit ci-dessus. On a montré une pile comportant un axe positif et deux axes négatifs mais on peut envisager également un axe pour chaque polarité.

**Revendications**

1. Générateur électrochimique à anode de lithium et à cathode liquide comportant dans un boîtier (1) un empilage d'éléments plats constitués par des séparateurs et des électrodes munies d'une plaque métallique collectrice, chaque électrode présentent au moins deux ouvertures par lesquelles elles sont enfilées respectivement sur au moins deux axes métalliques parallèles entre eux avec des entretoises métalliques maintenant entre les plaques l'intervalle souhaité et réalisant la liaison électrique entre les électrodes correspondantes, caractérisé par le fait que le premier desdits axes métalliques (4) associé aux électrodes (10) de la première polarité traverse la totalité dudit empilage, qu'au moins un compartiment réserve d'électrolyte (61) est ménagé suivant la hauteur de l'empilage entre ce dernier et ledit boîtier (1), que dans ce compartiment émergent des pattes de reprise de courant (23) enfilées sur le second desdits axes métalliques (6) et appartenant aux plaques collectrices des électrodes (20) de la seconde polarité, et qu'une extrémité desdits axes est fixée rigidement à l'une des faces extrêmes (3) dudit boîtier (1) tandis que l'autre extrémité bénéficie d'un jeu à l'intérieur dudit boîtier.

2. Générateur électrochimique selon la revendication 1, caractérisé par le fait que ledit premier desdits axes métalliques (4) traverse ledit empilage sensiblement au centre des électrodes et qu'il constitue la borne positive, tandis que deux axes (5, 6) constituant deux bornes négatives sont situés respectivement dans deux compartiments latéraux formant réserves d'électrolyte.

3. Générateur électrochimique selon l'une des revendications 1 et 2, caractérisé par le fait que les bords desdits séparateurs (30) émergent dans lesdits compartiments réserves d'électrolyte et font fonction de mèches.

4. Générateur électrochimique selon l'une des revendications précédentes, caractérisé par le fait que lesdits pattes de reprise de courant (22, 23) comportent un étranglement (71, 72) choisi de manière qu'elles constituent un fusible pour le couple auquel elles appartiennent.

5. Générateur électrochimique selon l'une des revendications précédentes, caractérisé par le fait que lesdits séparateurs et lesdites pattes de reprises de courant présentent des ouvertures (50) destinées à recevoir des tiges de guidage au moment du montage.

6. Générateur électrochimique selon l'une des revendications précédentes caractérisé par le fait que chaque électrode négative (20) comprend au moins une feuille de lithium et une grille de nickel (21) servant de collecteur de courant, munie à deux extrémités desdites pattes de reprise de courant (22, 23).

7. Générateur électrochimique selon l'une des revendications précédentes caractérisé par le fait que chaque cathode (10) est constituée d'une grille de nickel dont les faces sont recouvertes de noir d'acétylène.

8. Générateur électrochimique selon l'une des revendications précédentes caractérisé par le fait que chaque séparateur (30) est formé d'une couche en tissu de verre associée à une couche microporeuse en feutre de fibres de verre.

**Claims**

1. An electrochemical generator with a lithium anode and liquid cathode, consisting of a stack of flat elements enclosed in a case (1), each element comprising separators and electrodes fitted with a metal collector plate, each electrode presenting at least two openings whereby it is threaded on respectively at least two parallel metal rods with metal spacers intended to maintain the desired interval between the plates and to ensure the electrical connection between the corresponding electrodes, characterized in that the first of said metal rods (4) connected to electrodes (10) of the first polarity traverses the totality of said stack, that at least one electrolyte reserve compartment (61) is disposed alongside the height of the stack between the latter and said case (1), that current collector lugs (23) emerge in the compartment, that said lugs are threaded onto the second of said metal rods (6) and belong to the collector plates of the electrodes (20) of the second polarity, and that one end of said rods is rigidly attached to one of the end faces (3) of said case (1), whereas the other end is allowed free motion inside said case.

2. An electrochemical generator according to claim 1, characterized in that said first of said metal rods (4) traverses said stack substantially in the center of the electrodes, and that it constitutes the positive terminal, whereas two rods (5, 6) constituting two negative terminals are situated respectively in two lateral compartments forming electrolyte reservoirs.

3. An electrochemical generator according to any one of claims 1 and 2, characterized in that the edges of said separators (30) emerge in said electrolyte reserve compartments and serve to function as wicks.

4. An electrochemical generator according to any one of the preceding claims, characterized in that said current collector lugs (22, 23) include a necking (71, 72) such that they constitute a fuse for the couple to which they belong.

5. An electrochemical generator according to any one of the preceding claims, characterized in that said separators and said current collector lugs have openings (50) designed to receive guide rods when being assembled.

6. An electrochemical generator according to any one of the preceding claims, characterized in that each negative electrode (20) comprises at least a lithium sheet and a nickel grid (21) acting as current collector, equipped with said current collector lugs (22, 23) at two ends.

7. An electrochemical generator according to any one of the preceding claims, characterized in that each cathode (10) comprises a nickel grid, whose faces are coated with acetylene black.

8. An electrochemical generator according to any one of the preceding claims, characterized in that each separator (30) is formed of a glass fabric layer associated with a layer of felted glass fiber.

**Patentansprüche**

1. Elektrochemischer Generator mit Lithiumanode und flüssiger Kathode, mit einem in einem Gehäuse (1) enthaltenen Stapel flacher Elemente, die aus Separatoren und mit einer metallischen Sammelplatte versehenen Elektroden bestehen, wobei jede Elektrode mindestens zwei Öffnungen besitzt, durch welche sie jeweils auf mindestens zwei parallele metallische Stangen unter Einfügung metallischer Zwischenstücke aufgereiht sind, welche zwischen den Platten den gewünschten Abstand halten und die elektrische Verbindung zwischen den entsprechenden Elektroden herstellen, dadurch gekennzeichnet, daß die erste der metallischen Stangen (4), die den Elektroden (10) der ersten Polarität zugeordnet sind, den gesamten Stapel durchquert, daß mindestens ein Elektrolytreserveabteil (61) in der Höhe des Stapels gesehen zwischen dem Stapel und dem Gehäuse (1) eingerichtet ist, daß aus dem Abteil Stromabnahmefahnen (23) vorstehen, die auf die zweite der metallischen Stangen (6) aufgesteckt sind und den Sammelplatten (20) der Elektroden der zweiten Polarität angehören, und daß ein Ende der Stangen starr an einer der Endseiten (3) des Gehäuses (1) befestigt ist, während das andere Ende im Inneren des Gehäuses über ein Spiel verfügt.

2. Elektrochemischer Generator nach Anspruch 1, dadurch gekennzeichnet, daß die erste der metallischen Stangen (4) den Stapel im wesentlichen in der Mitte der Elektroden durchdringt und die positive Klemme bildet, während zwei weitere, zwei negative Klemmen bildende Stangen (5, 6) jeweils in zwei Seitenabteilen angeordnet sind, welche Elektrolytreserven bilden.

3. Elektrochemischer Generator nach einem der Ansprüche 1 und 2, dadurch gekennzeichnet, daß die Kanten der Separatoren in die Elektrolytreserveabteile eindringen und Dochtfunktion besitzen.

4. Elektrochemischer Generator nach einem der vorhergehenden Ansprüche, dadurch gekennzeichnet, daß die Stromabnahmefahnen (22, 23) eine Einschnürung aufweisen, die so beschaffen ist, daß sie für das ihr zugehörige Elektrodenpaar eine Sicherung bildet.

5. Elektrochemischer Generator nach einem der vorhergehenden Ansprüche, dadurch gekennzeichnet, daß die Separatoren und die Stromabnahmefahnen Öffnungen (50) zur Aufnahme von Führungsstangen bei der Montage besitzen.

6. Elektrochemischer Generator nach einem der vorhergehenden Ansprüche, dadurch gekennzeichnet, daß jede negative Elektrode (20) mindestens ein Lithiumblatt und ein Nickelgitter als Stromkollektor aufweist, das an beiden Enden mit den Stromabnahmefahnen (22, 23) versehen ist.

7. Elektrochemischer Generator nach einem der vorhergehenden Ansprüche, dadurch gekennzeichnet, daß jede Kathode (10) aus einem Nickelgitter besteht, dessen Flächen mit Azethylenruß bedeckt sind.

8. Elektrochemischer Generator nach einem der vorhergehenden Ansprüche, dadurch gekennzeichnet, daß jeder Separator (30) aus einer Glasgewebeschicht besteht, die mit einer mikroporösen Lage aus Glasfaserfilz in Verbindung steht.

# FIG.1

# FIG.2

# FIG.3

# FIG.4

# FIG.5

# FIG.6